# EUROPÄISCHE PATENTSCHRIFT

(11) **EP 0 754 544 B1**
(45) Veröffentlichungstag und Bekanntmachung des Hinweises auf die Patenterteilung: **06.08.2003**
(21) Anmeldenummer: 96110709.1
(22) Anmeldetag: 03.07.1996
(51) Int. Cl.: B32B 27/18, B32B 27/20

(54) **Verbundfolie und Verfahren zur Herstellung einer solchen Verbundfolie**
Composite film and process for producing the same
Feuille composite et son procédé de fabrication

(30) Priorität: 17.07.1995 DE 19526044; 05.03.1996 DE 19608453
(43) Veröffentlichungstag der Anmeldung: 22.01.1997
(73) Patentinhaber: Nordenia Technologies GmbH, 48599 Gronau (DE)
(72) Erfinder: Schwinn, Georg, 48599 Gronau (DE)
(74) Vertreter: Albrecht, Rainer Harald, Dr.-Ing.

(56) Entgegenhaltungen:
- EP-A- 0 309 073
- EP-A- 0 335 614
- DATABASE WPI Section Ch, Week 9436 Derwent Publications Ltd., London, GB; Class A32, AN 94-290518 XP002092830 & JP 06 218886 A (SEKISUI CHEM IND CO LTD) , 9. August 1994
- DATABASE WPI Section Ch, Week 7540 Derwent Publications Ltd., London, GB; Class A18, AN 75-66512W XP002092831 & JP 50 027072 B (MITSUBISHI RAYON PLAS) , 4. September 1975

## Beschreibung

Die Erfindung betrifft eine Verbundfolie.

Es sind verschiedene Verfahren zur Herstellung von Verbundfolien bekannt.

Es stellt sich die Aufgabe, eine Verbundfolie nach einem neuartigen Prinzip herzustellen.

Hierzu wird eine Verbundfolie aus einer Trägerfolie vorgeschlagen, die mit einer Folie ("Hetero-Folie") verbunden ist, die aus einer heterogenen Mischung aus einer thermoplastischen, nach der Verarbeitung teilkristallin oder amorph aushärtenden, dehnbaren Kunststoff-Grundsubstanz und darin verteilten Zusatzstoff-Teilchen besteht, die mit der Grundsubstanz misch- und extrudierbar, jedoch darin heterogen eingebunden sind, wobei in der Hetero-Folie die darin heterogen verteilten Zusatzstoff-Teilchen an ihren Grenzbereichen zu der sie umgebenden Kunststoff-Grundsubstanz von dieser abgelöst sind und das Material der Hetero-Folie an den zahlreichen Ablösbereichen zu einer flauschigen Oberfläche aufgestellt ist.

Eine solche Folie läßt sich aus verschiedenen Grundmaterialien herstellen. So sollte das Grundmaterial der Hetero-Folie ein Polymer aus der Gruppe Polyolefine, Polyamide, Polycarbonate, Polyester oder ihrer Co-Polymerisate sein. Die Zusatzstoffe sollten so ausgewählt werden, daß sie nicht adhäsiv zu dieser Grundsubstanz zu verarbeiten sind. Dazu eignen sich als Zusatzstoffe beispielsweise solche aus der Gruppe der anorganischen Füllstoffe, wie Titandioxid, Ruß, Kaolin, Quarzmehl, Kieselsäure, Kreide, Lithopone und dergleichen.

Es ist aber auch möglich, und eine solche Verfahrensweise wird vorgezogen, Polymer-Paarungen zur Herstellung der Hetero-Folie zu verwenden, wobei beide Substanzen aus der Gruppe der organischen Stoffe ausgewählt sind, beispielsweise Polystyrol oder Polyamid bei einer Grundsubstanz aus Polyolefinen, insbesondere Polyethylen oder Polypropylen. Auch andere adhäsiv nicht zu verarbeitende Polymer-Paarungen können gewählt werden.

Die Trägerfolie besteht aus einem Elastomer, z. B. einem thermoplastischen Kautschuk oder aus einem Styrol-Butadien-Styrol-Copolymer, einem SBR-Elastomer oder aus EPDM (Ethylen-Propylen-Kautschuk).

Die Trägerfolie kann auf einer oder auf beiden Seiten mit einer derartigen Hetero-Folie verbunden sein, wobei auch verschiedene Arten von Zusatzstoffen verwendet werden können. Weiterhin kann die Trägerfolie mit der Hetero-Folie über einen Schmelzklebstoff verbunden sein. Die Trägerfolie kann auch mehrere Folienschichten aufweisen.

Verfahren zur Herstellung einer derartigen Verbundfolie können auf verschiedenen Verfahrens-Prinzipien beruhen.

Ein mögliches, derartiges Verfahren umfaßt folgende Verfahrensschritte:
- mit einer Trägerfolie, die aus einem Elastomer mit einer hohen Dehnfähigkeit und einer Rückstellfähigkeit derselben oder gegebenenfalls niedrigeren Größenordnung besteht, wird eine Folie ("Hetero-Folie") verbunden, die aus einer heterogenen Mischung aus einer thermoplastischen, nach der Verarbeitung teilkristallin oder amorph aushärtenden, dehnbaren Kunststoff-Grundsubstanz und einem oder mehreren darin verteilten Zusatzstoff-Teilchen besteht, die mit der Grundsubstanz misch- und extrudierbar, jedoch darin heterogen eingebunden sind,
- die Verbundfolie wird um einen Betrag gedehnt, der unterhalb der maximalen Dehnfähigkeit der Trägerfolie liegt,
- wobei die Hetero-Folie ebenfalls gedehnt wird und dabei die verteilten Zusatzstoff-Teilchen an ihren Grenzbereichen zu der sie umgebenden Kunststoff-Grundsubstanz sich von dieser lösen,
- so daß beim Loslassen der gedehnten Trägerfolie diese in die Ausgangskonfiguration zurückgeht oder in einem weitgehend gedehnten Zustand verbleibt, das Material der Hetero-Folie sich jedoch an den zahlreichen gerissenen Grenzbereichen aufstellt und eine flauschige Oberfläche erzeugt.

Die Trägerfolie kann mit der Hetero-Folie coextrudiert werden; es ist aber auch möglich, beispielsweise Folien aus Schmelzdüsen übereinander zu schichten, wobei die Trägerfolie eine Schmelzkleberbeschichtung aufweisen sollte oder on-line mit einer solchen beschichtet wird.

Besonders darauf hinzuweisen ist, daß die Dehnung der Folie sowohl in Längsrichtung als auch in Querrichtung als auch in übereinanderliegenden Richtungen erfolgen kann. Dies ergibt einen "Strich" des Flausches und eine besonders hohe Dichte des Flausches.

Der Betrag, um den die Verbundfolie gedehnt wird, sollte bis zu 300 % der Ursprungsausdehnung sein. Dabei ist möglich, daß auch eine gering-elastische Trägerfolie verwendet wird, die eine hohe bleibende Dehnung hat. Dies führt zu einem niedrigeren Volumen, aber zu einer höheren Flächenausbeute.

Eine andere Möglichkeit, die Flauschigkeit und/oder Dehnfähigkeit zu erhöhen, ist es, daß die Verbundfolie vor dem Dehnen geprägt wird. Das Dehnen der Folie kann in einem Reckrahmen erfolgen, und zwar durch ein mechanische Reckverfahren in Längs- oder Querrichtung. Es ist aber auch möglich, eine coextrudierte Folie als Schlauch herzustellen, den Schlauch zu schließen und anschließend diesen Schlauch durch Erhöhung des Irimendruckes zu dehnen und damit die genannte Flauschigkeit herzustellen.

Es stellt sich weiterhin die Aufgabe, das beschriebene Verfahren auch dahingehend anzuwenden, daß die erzielte Flauschigkeit nicht die Haptik der Verbundfolie verbessert, sondern dazu verwandt wird, bei Verbundfolien, seien sie glatt oder aufgerauht, das Volumen zu vergrößern.

Diese Aufgabe wird dadurch gelöst, daß wenigstens eine flauschig gemachte Hetero-Folie von zwei Trägerfolien eingeschlossen ist.

Dabei wird im Inneren der Verbundfolie das Aufstellen und Lösen der heterogenen Teilchen dazu benutzt, das Volumen der Verbundfolie zu vergrößern.

Insbesondere wird eine voluminös gemachte Folie vorgeschlagen, die aus einer Folge von fünf Folien wie folgt besteht:
Trägerfolie
Hetero-Folie
Trägerfolie
Hetero-Folie
Trägerfolie.

Beispielsweise kann ein Folienverbund aus einer Folge von fünf Folien wie folgt coextrudiert werden:
Trägerfolie
Hetero-Folie
Trägerfolie
Hetero-Folie
Trägerfolie
und anschließend volumenvergrößert werden.

Die Erfindung soll anhand von einzelnen Beispielen erläutert werden. Ferner wird anhand der Figuren das Verfahren erläutert. Die Figuren zeigen im einzelnen:
- Figuren 1a, 1b, 1c: eine zweischichtige Verbundfolie vor, während und nach dem Reckvorgang (a,b,c);
- Fig. 4a, 4b, 4c: eine dreischichtige Verbundfolie, vor, während und nach dem Reckvorgang (a,b,c) ;
- Fig. 5: eine fünfschichtige Verbundfolie nach dem Reckvorgang;

### Beispiel 1

Für die Hetero-Folie wird ein Compound, bestehend aus 25 Gew.% Polystyrol der Dichte 1,05 mit 75 Gew.% eines homopolymerisiertes Polypropylen der Dichte 0,91 in einem Plastifikator gemischt und plastifiziert. Das plastifizierte Gemisch wird oberhalb der Schmelztemperatur über eine Austragsschnecke einem Schlitzblaskopf zugeleitet. Dieser drückt eine Compound-Folie der Dicke 200 µm auf eine ausgewalzte Folie aus EPDM einer Dicke von 150 µm mit klebender Oberfläche, sodaß eine Verbundfolie entsteht (Zustand a).

Diese Verbundfolie kühlt ab und wird nach dem Abkühlen um 150 % ihrer Ursprungslänge gedehnt (Zustand b). Dabei lösen sich die Polystyrol-Teilchen 1 von dem sie umgebenden PP-Material 2. Nach dem Zurückstellen der Kautschukfolie 3 stellen sich die gerissenen Ränder der Grenzbereiche auf und bilden eine flauschige Oberfläche (Zustand c).

### Beispiel 2

Für die Hetero-Folie wird ein Compound, bestehend aus 30 Gew.% TiO2 und 70 Gew.% PE-LD hergestellt und plastifiziert. Das erwärmte und plastifizierte Gemisch wird in einer Coextrusions-Blasdüse zusammen mit einem gefüllten Styrol-Butadien-Kautschuk coextrudiert. Danach hat die aus dem erstgenannten Compound bestehende Hetero-Folie eine Dicke von 80 µm und die Elastomer-Folie eine Dicke von 70 µm.

Die beiden aufeinander haftenden Folien werden um 120 % ihrer Ursprungslänge gedehnt. Dabei lösen sich die anorganischen Titandioxid-Teilchen von dem sie umgebenden PE-LD-Material. Nach dem Zurückstellen der Elastomerfolie stellen sich die gerissenen Ränder der Grenzbereiche auf und bilden eine flauschige Oberfläche.

### Beispiel 3

Die Hetero-Folie wird aus einem Compound, bestehend aus 25 Gew.% Polyamid des Typs PA6 der Dichte 1,13, mit 75 Gew.% Polypropylen (PP-H) der Dichte 0,91 gemischt und plastifiziert. Als Trägerfolie wird eine Folie aus SBS (Styrol-Butadien-Styrol)-Elastomer verwendet.

Die coextrudierte und erkaltete Verbundfolie wird sowohl in Fließrichtung als auch senkrecht dazu um jeweils 125 % der Ursprungslänge gedehnt und wieder zurückgestellt. Hier ergibt sich ein besonders flauschiger Touch.

### Beispiel 4

Eine nach einem der Beispiele 1 bis 3 hergestellte Vorverbundfolie wird vor dem Dehnen durch eine sogenannte Krepp-Maschine, bestehend aus zwei kontrollierten Zahnrädern, hindurchgeleitet, so daß eine wellige Präge-Kontur der Folie hervorgerufen wird. Nach dem Dehnen geht die Elastomer-Folie in den welligen Zustand zurück. Gleichzeitig wird eine hohe Flauschigkeit erzielt.

### Beispiel 5

Eine Elastomer-Folie wird auf beiden Seiten mit einer Hetero-Folie belegt und gedehnt, wobei sich eine beidseitig angebrachte Flauschzone ergibt.

### Beispiel 7

Ein thermoplastischer Kautschuk (thermoplastisches PUR-Elastomer) wird in einer Schlauch-Extrusionsmaschine zusammen mit einem Compound aus 30 Gew.% Polystyrol der Dichte 1,05 mit 70 Gew.% eines homopolymeren Polypropylens der Dichte 0,91 zusammen coextrudiert. Der Extrusionsschlauch wird an seinem Ende durch Walzendruck abgequetscht. Von unten wird Luft eingeblasen, so daß der kalte oder temperierte Schlauch einer biaxialen, durch das Aufblasen verursachten Reckung unterzogen wird. Nach dem pneumatischen Dehnen wird die Elastomer-Folie in den ursprünglichen Zustand zurückgelassen, wodurch sich die copolymerisierte Compoundfolie flauschig aufstellt.

### Beispiel 10

Für die Hetero-Folie wird ein Compound, bestehend aus 25 Gew.% Polystyrol der Dichte 1,05 mit 75 Gew.% eines homopolymerisiertes Polypropylen der Dichte 0,91 in einem Plastifikator gemischt und plastifiziert. Das plastifizierte Gemisch wird oberhalb der Schmelztemperatur einem ersten Ringspalt einer Schlauchblasmaschine zugeleitet. Coextrudiert zu der vorgenannten Hetero-Folie werden über zwei zu dem erstgenannten Ringspalt konzentrische Ringspalte ein schmelzflüssiger Compound aus EPDM mit klebender Oberfläche als Trägerfolie, so daß ein coextrudierter Schlauch aus einer Verbundfolie entsteht (Zustand gemäß Fig. 4a). Die Verbundfolie besteht aus einer Trägerfolie 10, einer Hetero-Folie 20 und einer weiteren Trägerfolie 30. Dabei haben die Folien im ungereckten Zustand eine Dicke von 200 µm (Hetero-Folie) und 100 µm. (Trägerfolie).

Die Schlauchfolie wird aufgeschnitten und getrennt in zwei Folienlagen abgelegt. Die Verbundfolie kühlt ab und wird nach dem Abkühlen (Zustand A) um 150% ihrer Ursprungslänge gedehnt (danach Zustand gemäß Fig. 4b). Dabei lösen sich in der Mittelschicht die heterogenen Polystyrol-Teilchen 1 von dem sie umgebenden Polypropylen-Material 2. Nach dem Recken läßt man die Verbundfolie sich aufgrund der Rückstellkraft der EPDM-Kautschukfolie zuückstellen. Dabei stellen sich die gerissenen Ränder der Grenzbereiche auf und bilden zusammen mit den jetzt mehr in Wirrlage gestellten Polystyrol-Teilchen 1 eine volumenvergrößerte Mittelschicht (Zustand gemäß Fig 4c).

### Beispiel 11

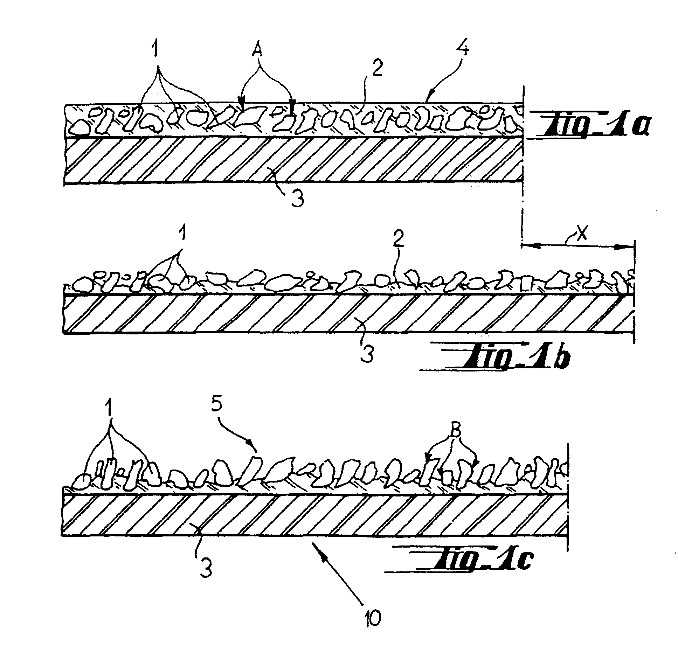

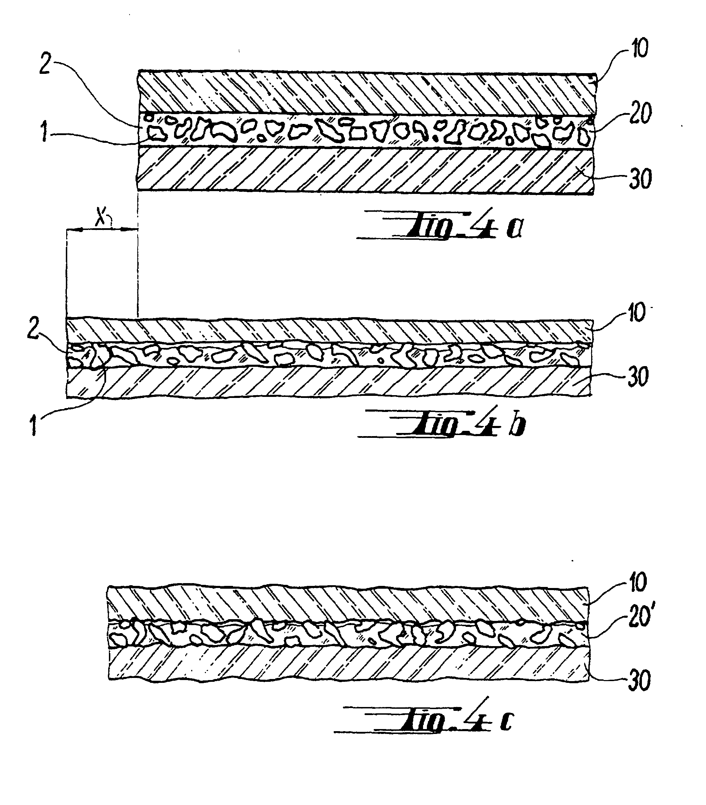

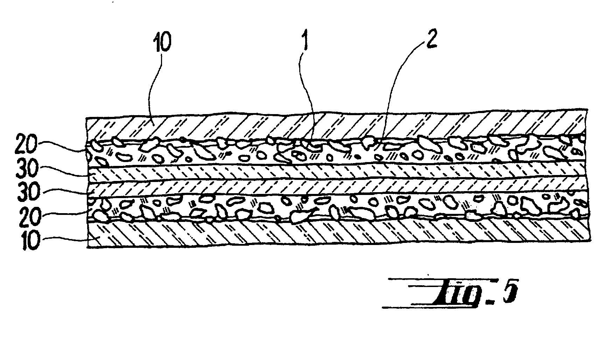

Es ist aber auch möglich, eine fünfschichtige Folie gemäß Fig. 5 herzustellen, indem man zwei Schlauchfolien gemäß Beispiel 1 flach aufeinanderlegt und verblockt, so daß eine Verbundfolie der Folge:
Trägerfolie 10
Hetero-Folie 20
doppelte Trägerfolie 30, 30
Hetero-Folie 20
Trägerfolie 10
entsteht. Bei Dehnung der vorgenannten fünfschichtigen Folie stellt sich im Prinzip der gleiche Effekt der Volumenvergößerung ein, wie er in Fig. 1c dargestellt ist.

### Beispiel 12

Für die Hetero-Folie wird ein Compound, bestehend aus 30 Gew.% TiO2 und 70 Gew.% PE-LD hergestellt und plastifiziert. Das erwärmte und plastifizierte Gemisch wird in einer Coextrusions-Blasdüse zusammen mit einem gefüllten Styrol-Butadien-Kautschuk coextrudiert. Danach hat die aus dem erstgenannten Compound bestehende Hetero-Folie eine Dicke von 80 µm und die Elastomer-Folie eine Dicke von 70 µm. Die noch heiße Schlauchfolie wird aufeinander flachgelegt und verblockt, sodaß sich eine Schichtenfolge wie folgt ergibt:
Trägerfolie 10
doppelte Hetero-Folie 20/20
Trägerfolie 10.

Die drei aufeinander haftenden Folien werden um 120 % ihrer Ursprungslänge gedehnt. Dabei lösen sich die anorganischen Titandioxid-Teilchen von dem sie umgebenden PE-LD-Material. Nach dem Zurückstellen der Elastomerfolie stellen sich die gerissenen Ränder der Grenzbereiche auf und bilden zusammen mit den anorganischen Titandioxid-Teilchen eine milchige volumenvergrößerte Innenschicht.

### Beispiel 13

Die Hetero-Folie wird aus einem Compound, bestehend aus 25 Gew.% Polyamid des Typs PA6 der Dichte 1,13, mit 75 Gew.% Polypropylen (PP-H) der Dichte 0,91 gemischt und plastifiziert. Als Trägerfolie wird eine Folie aus SBS (Styrol-Butadien-Styrol)-Elastomer verwendet. Die beiden Substanzen werden in einem Schlauchextruder coextrudiert. Die noch heiße Schlauchfolie wird aufeinander flachgelegt und verblockt, sodaß sich eine Schichtenfolge einer Verbundfolie wie folgt ergibt:
Trägerfolie
doppelte Hetero-Folie
Trägerfolie.

Die erkaltete Verbundfolie wird sowohl in Fließrichtung als auch senkrecht dazu um jeweils
125 % der Ursprungslänge gedehnt und wieder zurückgestellt. Hier ergibt sich ein besonders flauschiger Touch.

### Beispiel 14

Eine nach einem der Beispiele 1 bis 3 hergestellte Vor-Verbundfolie wird vor dem Dehnen durch eine sogenannte Krepp-Maschine, bestehend aus zwei kontrollierten Zahnrädern, hindurchgeleitet, so daß eine wellige Präge-Kontur der Folie hervorgerufen wird. Nach dem Dehnen geht die Elastomer-Folie in den welligen Zustand zurück. Gleichzeitig wird eine hohe Volumenvergrößerung erzielt.

### Beispiel 15

Zwei Elastomer-Folie tragen zwischen sich eine und werden auf beiden Außenseiten mit je einer Hetero-Folie mittels Coextrusion belegt. Die abgekühlte Folie wird gedehnt, wobei sich eine beidseitig angebrachte Flauschzone und eine Volumenvergrößerung im Inneren der Folie ergibt.

### Beispiel 16

Ein thermoplastischer Kautschuk (thermoplastisches PUR-Elastomer) wird in einer Schlauch-Blasmaschine zusammen mit einem Compound aus 30 Gew.% Polystyrol der Dichte 1,05 mit 70 Gew.% eines homopolymeren Polypropylens der Dichte 0,91 zusammen coextrudiert. Der Extrusionsschlauch wird an seinem Ende durch Walzendruck abgequetscht. Von unten wird Luft eingeblasen, so daß der kalte oder temperierte Schlauch einer biaxialen, durch das Aufblasen verursachten Reckung unterzogen wird. Nach dem pneumatischen Dehnen wird die Elastomer-Folie in den ursprünglichen Zustand zurückgelassen, wodurch sich die copolymerisierte Compoundfolie flauschig aufstellt. Anschließend werden die flauschigen Lagen aufeinandergelegt, durch Infrarot erneut erwärmt und so ohne Volumeneinbuße verblockt.

Die vorgenannte Folie läßt sich in vielen Fällen dort einsetzen, wo eine flauschige Oberfläche erwünscht ist, insbesondere auf dem Hygienesektor. Die Folie kann zur Herstellung von Windelhöschen, Damenbinden oder Inkontizenzartikeln dienen. Es ist aber auch möglich, sie für Verpackungszwecke, zum Kaschieren von Oberflächen, wie Bucheinbänden, oder für Dekorationszwecke zu verwenden.

## Patentansprüche

1. Verbundfolie aus mindestens einer elastischen Trägerfolie (3) und mindestens einer mit der Trägerfolie (3) verbundenen Hetero-Folie (4), die aus einer heterogenen Mischung aus einer thermoplastischen, nach der Verarbeitung teilkristallin oder amorph aushärtenden, dehnbaren Kunststoff-Grundsubstanz (2) und darin verteilten Zusatzstoff-Teilchen (1) besteht, wobei die Zusatzstoff-Teilchen (1) mit der Grundsubstanz (2) misch- und extrudierbar, jedoch darin heterogen eingebunden sind, **dadurch gekennzeichnet, dass** die Trägerfolie (3) aus einem Elastomer besteht und dass die in der Hetero-Folie (4) verteilten Zusatzstoff-Teilchen (1) durch eine Dehnung des aus der Trägerfolie (3) und der Hetero-Folie (4) bestehenden Folienverbundes an ihren Grenzbereichen von der Grundsubstanz (2) abgelöst sind sowie das Material der Hetero-Folie (4) in Folge einer elastischen Rückstellung der Trägerfolie (3) an den zahlreichen Ablösebereichen zu einer flauschigen Oberfläche aufgestellt ist.

2. Verbundfolie nach Anspruch 1, **dadurch gekennzeichnet, dass** die Kunststoff-Grundsubstanz (2) der Hetero-Folie ein Polymer aus der Gruppe Polyolefine, Polyamide, Polycarbonate, Polyester oder ihrer Copolymerisate ist.

3. Verbundfolie nach Anspruch 1 oder 2, **dadurch gekennzeichnet, dass** die Zusatzstoff-Teilchen (1) aus der Gruppe der anorganischen Füllstoffe, wie beispielsweise Titandioxid, Ruß, Kaolin, Quarzmehl, Kieselsäure, Kreide, Lithopone, ausgewählt sind.

4. Verbundfolie nach Anspruch 1 oder 2, **dadurch gekennzeichnet, dass** die Zusatzstoff-Teilchen (1) aus der Gruppe der organischen Stoffe, wie Polystyrol oder Polyamid, ausgewählt sind, wobei die Zusatzstoff-Teilchen und die Kunststoff-Grundsubstanz adhäsiv nicht zu verarbeitende Polymerpaarungen bilden.

5. Verbundfolie nach einem der Ansprüche 1 bis 4, **dadurch gekennzeichnet, dass** die Trägerfolie (3) aus EPDM oder einem Styrol-Butadien-Styrol-Copolymer besteht.

6. Verbundfolie nach einem der Ansprüche 1 bis 5, **dadurch gekennzeichnet, dass** die Trägerfolie (3) mit der Hetero-Folie (4) über einen Schmelzklebstoff verbunden ist.

7. Verbundfolie nach einem der Ansprüche 1 bis 6, **dadurch gekennzeichnet, dass** der Anteil der Zusatzstoff-Teilchen in der Gesamtmenge der Hetero-Folie zwischen 5 und 80 Gew.-% liegt.

8. Verbundfolie nach einem der Ansprüche 1 bis 7, **dadurch gekennzeichnet, dass** auf beiden Seiten der Trägerfolie (3) eine Hetero-Folie (4) angeordnet ist.

9. Verbundfolie nach einem der Ansprüche 1 bis 7, **dadurch gekennzeichnet, dass** wenigstens eine Hetero-Folie (20) als Zwischenschicht von zwei Trägerfolien (10, 30) eingeschlossen ist, wobei die in der Hetero-Folie verteilten Zusatzstoff-Teilchen (1) durch eine Dehnung des Folienverbundes an ihren Grenzbereichen von der Grundsubstanz (2) abgelöst sind und sich unter Volumenvergrößerung der Zwischenschicht (20) aufgestellt haben, und dass an der Außenseite mindestens einer der beiden Trägerfolien eine Hetero-Folie zur Erzeugung der flauschigen Oberfläche angeordnet ist.

10. Verfahren zur Herstellung einer flauschigen Verbundfolie nach einem der Ansprüche 1 bis 9, mit folgenden Verfahrensschritten:
a) eine Hetero-Folie, die aus einer heterogenen Mischungen aus einer thermoplastischen, nach der Verarbeitung teilkristallinen oder amorph aushärtenden, dehnbaren Kunststoff-Grundsubstanz und darin verteilten Zusatzstoff-Teilchen besteht, wird mit einer elastischen Trägerfolie verbunden, wobei die Trägerfolie aus einem Elastomer mit hoher Dehnfähigkeit und Rückstellfähigkeit besteht und wobei die Zusatzstoff-Teilchen mit der Kunststoff-Grundsubstanz misch- und extrudierbar, jedoch darin heterogen eingebunden sind;
b) der aus der Hetero-Folie und der elastischen Trägerfolie bestehende Folienverbund wird um einen Betrag gedehnt, der unterhalb der maximalen Dehnfähigkeit der Trägerfolie liegt, wobei die Zusatzstoff-Teilchen sich in der ebenfalls mitgedehnten Hetero-Folie an ihren Grenzbereichen von der sie umgebenden Kunststoff-Grundsubstanz ablösen;
c) bei einer nachfolgenden elastischen Rückstellung der Trägerfolie stellt sich das Material der Hetero-Folie an den zahlreichen gerissenen Grenzbereichen auf und bildet eine flauschige Oberfläche.

11. Verfahren nach Anspruch 10, **dadurch gekennzeichnet, dass** der Folienverbund zur Erzeugung der flauschigen Oberfläche um einen Betrag bis zu 300 % der Ursprungsausdehnung gedehnt wird.

12. Verfahren nach Anspruch 10 oder 11, **dadurch gekennzeichnet, dass** der Folienverbund sowohl in Längsrichtung als auch in Querrichtung gedehnt wird.

13. Verfahren nach einem der Ansprüche 10 bis 12, **dadurch gekennzeichnet, dass** der Folienverbund vor dem Dehnen geprägt wird.

14. Verfahren nach einem der Ansprüche 10 bis 13, **dadurch gekennzeichnet, dass** die Trägerfolie und die Hetero-Folie coextrudiert werden.

15. Verfahren nach Anspruch 14, **dadurch gekennzeichnet, dass** der coextrudierte Folienverbund als Schlauch hergestellt wird, dass der Schlauch geschlossen und anschließend durch Erhöhung des Innendruckes gedehnt wird, dass der Schlauch nach dem pneumatischen Dehnen in den ursprünglichen Zustand zurückgelassen wird, wodurch sich die Hetero-Folie flauschartig aufstellt, und dass der Schlauch doppellagig zusammengelegt wird und die aufeinanderliegenden Flächen durch Infraroterwärmung verblockt werden.

## Claims

1. A composite film comprising at least one elastic backing film (3) and at least one heterofilm (4) which is bonded to the backing film (3) and which consists of a heterogeneous mixture of a thermoplastic, extensible plastics base substance (2) which cures so as to become partially crystalline or amorphous after processing, and of additive particles (1) distributed therein, wherein the additive particles (1) can be mixed and extruded with the base substance (2) but are heterogeneously bound therein, **characterised in that** the backing film (3) consists of an elastomer and that the additive particles (1) which are distributed in the heterofilm (4) are separated at their boundary regions from the base substance (2) by stretching of the film composite consisting of the backing film (3) and of the heterofilm (4), and that the material of the heterofilm (4) is erected at the numerous separation regions, as a result of an elastic restoration of the backing film (3), to form a fleece-like surface.

2. A composite film according to claim 1, **characterised in that** the plastics base substance (2) of the heterofilm is a polymer of the group comprising polyolefines, polyamides, polycarbonates, polyesters or copolymers thereof.

3. A composite film according to claim 1 or 2, **characterised in that** the additive particles (1) are selected from the group comprising inorganic fillers such as titanium dioxide, carbon black, kaolin, quartz flour, hydrated silica, chalk and lithopone, for example.

4. A composite film according to claim 1 or 2, **characterised in that** the additive particles (1) are selected from the group comprising organic substances, such as polystyrene or polyamide, wherein the additive particles and the plastics base substance form polymer combinations which do not have to be processed adhesively.

5. A composite film according to any one of claims 1 to 4, **characterised in that** the backing film (3) consists of EPDM or of a styrene-butadiene-styrene copolymer.

6. A composite film according to any one of claims 1 to 5, **characterised in that** the backing film (3) is bonded to the heterofilm (4) via a hot melt-type adhesive.

7. A composite film according to any one of claims 1 to 6, **characterised in that** the proportion of additive particles in the total amount of heterofilm ranges between 5 and 80 % by weight.

8. A composite film according to any one of claims 1 to 7, **characterised in that** a heterofilm (4) is disposed on both sides of the backing film (3).

9. A composite film according to any one of claims 1 to 7, **characterised in that** at least one heterofilm (20) is enclosed as an intermediate layer by two backing films (10, 30), wherein the additive particles (1) which are distributed in the heterofilm are separated at their boundary regions from the base substance (2) by stretching of the film composite and are erected with an increase in volume of the intermediate layer (20), and that a heterofilm is disposed on the outside of at least one of the two backing films in order to produce a fleece-like surface.

10. A process for producing a fleece-like composite film according to any one of claims 1 to 9, comprising the following process steps:
a) a heterofilm, which consists of a heterogeneous mixture of a thermoplastic, extensible plastics base substance, which cures so as to become partially crystalline or amorphous after processing, and of additive particles distributed therein, is bonded to an elastic backing film, wherein the backing film consists of an elastomer having a high extensibility and restoring capacity, and wherein the additive particles can be mixed and extruded with the plastics base substance but are heterogeneously bound therein;
b) the film composite consisting of the heterofilm and the elastic backing film is stretched by an amount which is less than the maximum extensibility of the backing film, wherein the additive particles in the heterofilm, which is likewise stretched in conjunction, are separated at their boundary regions from the plastics base material which surrounds them;
c) during a subsequent elastic restoration of the backing film, the material of the heterofilm is erected at the numerous, fractured, boundary regions, and forms a fleece-like surface.

11. A process according to claim 10, **characterised in that** in order to produce the fleece-like surface the film composite is stretched by an amount of up to 300 % of its original extent.

12. A process according to claim 10 or 11, **characterised in that** the film composite is stretched both in a longitudinal direction and in a transverse direction.

13. A process according to any one of claims 10 to 12, **characterised in that** the film composite is embossed before stretching.

14. A process according to any one of claims 10 to 13, **characterised in that** the backing film and the heterofilm are coextruded.

15. A process according to claim 14, **characterised in that** the coextruded film composite is produced as a flexible tube, that the flexible tube is closed and is subsequently stretched by increasing the internal pressure, that after pneumatic stretching the flexible tube is allowed to revert to its original state, whereby the heterofilm is erected in a fleece-like form, and that the flexible tube is placed together as a double layer and the superimposed faces are bonded together by infra-red heating.

## Revendications

1. Feuille composite se composant d'au moins une feuille support élastique (3) et d'au moins une hétérofeuille (4) liée à la feuille support (3), qui se compose d'un mélange hétérogène réalisé à partir d'une substance de base en matière plastique (2), extensible, thermoplastique, semi-cristalline ou durcissant de manière amorphe après le traitement et de particules d'adjuvants (1) qui y sont réparties, les particules d'adjuvants (1) étant intégrées avec la substance de base (2) de manière miscible et extrudable, cependant de manière hétérogène dans celle-ci, **caractérisée en ce que** la feuille support (3) se compose d'un élastomère et que les particules d'adjuvants (1) réparties dans l'hétérofeuille (4) sont détachées de la substance de base (2) par étirement de la feuille composite constituée de la feuille support (3) et de l'hétérofeuille (4) à ses régions limites de même que le matériau de l'hétérofeuille (4) se met en forme, à la suite d'un tour élastique de la feuille support (3), aux nombreuses zones de détachement en une surface en frise.

2. Feuille composite selon la revendication 1, **caractérisée en ce que** la substance de base en matière plastique (2) de l'hétérofeuille est un polymère du groupe des polyoléfines, polyamides, polycarbonates, polyesters ou de leurs copolymères.

3. Feuille composite selon la revendication 1 ou 2, **caractérisée en ce que** les particules d'adjuvants (1) sont sélectionnées à partir du groupe des charges anorganiques, comme par exemple le dioxyde de titane, la suie, le kaolin, la poudre de quartz, l'acide silicique, la craie, le lithopone.

4. Feuille composite selon la revendication 1 ou 2, **caractérisée en ce que** les particules d'adjuvants (1) sont sélectionnées à partir du groupe des matières organiques, telles que le polystyrène ou le polyamide, les particules d'adjuvants et la substance de base en matière plastique formant des associations de polymères qui ne sont pas à traiter de manière adhésive.

5. Feuille composite selon l'une des revendications 1 à 4, **caractérisée en ce que** la feuille support (3) se compose de terpolymère éthylène-propylène-diène ou d'un copolymère styrène-butadiène-styrène.

6. Feuille composite selon l'une des revendications 1 à 5, **caractérisée en ce que** la feuille support (3) est liée à l'hétérofeuille (4) par l'intermédiaire d'une colle fusible.

7. Feuille composite selon l'une des revendications 1 à 6, **caractérisée en ce que** la part de particules d'adjuvants dans la quantité totale de l'hétérofeuille se situe entre 5 et 80 % en poids.

8. Feuille composite selon l'une des revendications 1 à 7, **caractérisée en ce qu'**une hétérofeuille (4) est disposée des deux côtés de la feuille support (3).

9. Feuille composite selon l'une des revendications 1 à 7, **caractérisée en ce qu'**au moins une hétérofeuille (20) est incluse en tant que couche intermédiaire de deux feuilles supports (10, 30), les particules d'adjuvants (1) réparties dans l'hétérofeuille étant détachées de la substance de base (2) par étirement de la feuille composite à ses régions limites et s'étant mises en forme avec augmentation du volume de la couche intermédiaire (20) et **en ce qu'**une hétérofeuille, destinée à produire la surface en frise, est disposée sur la face extérieure d'au moins l'une des deux feuilles supports.

10. Procédé de fabrication d'une feuille composite en frise selon l'une des revendications 1 à 9, avec les étapes de procédé suivantes :
a) une hétérofeuille, qui se compose d'un mélange hétérogène réalisé à partir d'une substance de base en matière plastique extensible, thermoplastique, semi-cristalline ou durcissant de manière amorphe après le traitement et de particules d'adjuvants qui y sont réparties, est combinée avec une feuille support élastique, la feuille support se composant d'un élastomère avec extensibilité et aptitude au retour élevées et les particules d'adjuvants étant intégrées avec la substance de base en matière plastique de manière miscible et extrudable, cependant de manière hétérogène dans celle-ci ;
b) la feuille composite qui se compose de l'hétérofeuille et de la feuille support élastique est étirée d'une valeur qui se situe au-dessous de l'extensibilité maximale de la feuille support, les particules d'adjuvants se détachant de la substance de base en matière plastique qui les entoure dans l'hétérofeuille également simultanément étirée à ses régions limites ;
c) lors d'un retour élastique ultérieur de la feuille support, le matériau de l'hétérofeuille se met en forme sur les nombreuses régions limites déchirées et forme une surface en frise.

11. Procédé selon la revendication 10, **caractérisée en ce que** la feuille composite est étirée pour obtenir la surface en frise d'une valeur allant jusqu'à 300 % de l'allongement d'origine.

12. Procédé selon la revendication 10 ou 11, **caractérisée en ce que** la feuille composite est étirée tant dans le sens longitudinal que dans le sens transversal.

13. Procédé selon l'une des revendications 10 à 12, **caractérisée en ce que** la feuille composite est estampée avant l'étirement.

14. Procédé selon l'une des revendications 10 à 13, **caractérisée en ce que** la feuille support et l'hétérofeuille sont coextrudées.

15. Procédé selon la revendication 14, **caractérisée en ce que** la feuille composite coextrudée est fabriquée en tant que tuyau souple, que le tuyau souple est fermé et étiré ensuite par élévation de la pression interne, que le tuyau souple est ramené à son état d'origine après l'étirage pneumatique, ce par quoi l'hétérofeuille se met en forme en frise et **en ce que** le tuyau souple est plié en deux couches et les surfaces placées les unes sur les autres sont bloquées par chauffage à infrarouge.
